# EUROPEAN PATENT SPECIFICATION

(11) **EP 0 596 877 B1**
(45) Date of publication and mention of the grant of the patent: **13.08.1997**
(21) Application number: 91910533.8
(22) Date of filing: 07.05.1991
(51) Int. Cl.: A23L 1/05

(54) **DOG CHEW WITH MODIFIABLE TEXTURE**
HUNDEKNOCHEN MIT MODIFIZIERBARER STRUKTUR
OS A RONGER POUR CHIEN DE TEXTURE MODIFIABLE

(30) Priority: 10.05.1990 US 521521
(43) Date of publication of application: 18.05.1994
(73) Proprietor: Axelrod, Herbert R., Deal, New Jersey 07753 (US)
(72) Inventor: Axelrod, Herbert R., Deal, New Jersey 07753 (US)
(74) Representative: Mayes, Stuart David
(86) International application number: US9103166
(87) International publication number: WO9116825

(56) References cited:
- US-A- 3 630 755
- US-A- 3 958 032
- US-A- 3 978 236
- US-A- 3 978 244
- US-A- 4 163 804
- US-A- 4 224 348
- US-A- 4 364 925
- US-A- 4 409 250
- US-A- 4 419 372
- US-A- 4 880 642
- US-A- 4 904 495
- G. HAWLEY, "The Condensed Chemical Dictionary", Tenth Edition, Van Nostrand Reinhold publishers 1982 page 203 and 492.

## Description

### BACKGROUND OF THE INVENTION

### Field of the Invention

The present invention relates to a packaged dog chew and to a method of preparing a dog chew of selected hardness for administration to a dog.

### Brief Description of the Prior Art

Most dogs enjoy chewing on things although preferences vary as to the hardness of the substances favored. Some dogs like to chew on very hard materials such as cow bones, wood, nylon or polyurethane, others prefer softer chews such as rawhide while still others favor freeze dried snacks. Some dogs, due to their age, may not be able to chew on the very hard substances. Young dogs have insufficiently developed teeth while old dogs may have diseased gums or may have lost some of their teeth.

Many indigestible objects are given to dogs as a chew and although the dogs may enjoy chewing thereon, the objects are often swallowed in whole or in part. Once swallowed, these objects or fragments thereof can have an adverse effect on the dogs digestion and can become impacted in the dog's intestinal tract with life-threatening consequences.

In an attempt to make certain edible chews more appealing to dogs, a wide variety of additives are incorporated in products that, apart from being low in nutritional value, do not comprise particularly healthy supplements to a dog's diet. Often times the chew's taste is enhanced in order to make the particular chew more appealing to dogs who are otherwise not drawn to its hardness or texture.

The prior art is replete with both edible and inedible chew formulations that incorporate a wide variety of additives to make a product more appealing to certain dogs. The prior art however fails to provide a dog chew that is wholly digestible, nutritious, and of texture or hardness individually tailorable to suit a wide variety of dogs' preferences or needs.

For example, US-A-4,419,372 describes a chewable, digestible, high protein product for canine pets which has physical properties and an appearance resembling rawhide. The hardness of the product is determined during the manufacturing process which does not include a puffing step. By contrast, US-A-4,163,804 describes the manufacture of a puffable, thermoplastic composition derived from animal parts, although once again, by the end of the manufacturing process the hardness of the composition has been fully determined. Similarly, US-A-3,978,236 describes the preparation of a puffed textured, proteinaceous food product which involves subjecting water-moistered proteinaceous material to pressure and heat sufficient to cause the mix to convert to a hot, moist, plastic, extrudable, translucent to glassy mass. The mass is extruded through a die under non-puffing conditions to be later puffed in a separate and distinct operation. Once again however the hardness of the resulting product has been fully determined by the end of the manufacturing process.

### SUMMARY OF THE INVENTION

According to a first aspect of the present invention there is provided a packaged dog chew of modifiable hardness comprising a homogeneous mixture of 60-95% casein and 5-40% gelatin in which the dog chew is adapted for subsequent exposure to microwave radiation so as to cause the chew to expand and decrease in hardness by additionally having a total moisture content of 10-30% and being packaged in moisture-proof packaging.

Thus embodiments of the invention provide a dog chew that is completely digestible, highly nutritious, devoid of deleterious additives and of a modifiable texture or hardness quickly and easily tailorable by the owner to suit the need or preference of his particular dog. The chew is formulated from wholly proteinaceous ingredients, is molded into preselected shapes while the moisture-proof packaging helps to maintain a preselected moisture content during storage and handling. Upon removal from the package, the chew can be caused to swell up to four times its original volume, if desired, by subjecting it to microwave radiation. With this procedure, the chew's texture or hardness can be adjusted from anywhere from its original high density, extremely hard state to a low density, expanded, easily chewed state depending on the amount of microwave exposure. The chew can thereby quickly and easily be tailored to the texture preference of a wide variety of dogs, from a strong, large, healthy dog to a small puppy with puppy teeth or an older dog with decayed molars.

According to a second aspect of the present invention there is provided a method of preparing a dog chew of a selected hardness for administration to a dog comprising the steps of: intermixing a combination of 60-95% casein and 5-40% gelatin; adjusting the moisture content of said intermixed combination to total 10-30%; molding said adjusted combination into a preselected shape; storing the molded dog chew in moisture-proof packaging so as to maintain a preselected moisture content; removing the dog chew from the moisture-proof packaging and subjecting the dog chew to microwave radiation until it attains said selected hardness.

In one embodiment, high protein meal can be substituted for a portion of the casein, additionally, a very small amount of flavoring and coloring can be added to enhance taste and appearance. The resulting mixture may be subsequently either melted by heat, or dissolved in water before being molded into preselected shapes. The temperatures, moisture levels and handling during the mixing and molding and subsequent packaging procedure are precisely controlled to ensure that the resulting product has a moisture content of between 10% and 30%, and preferably at least 15%. The resulting chew is extremely hard while a 10-20 second exposure within a standard household microwave oven results in a light, easily chewed product for the dog.

Other features and advantages of the present invention will become apparent from the following detailed description, taken in conjunction with the accompanying drawings, which illustrate by way of example, the principles of the invention.

### BRIEF DESCRIPTION OF THE DRAWINGS

Fig. 1 illustrates a preferred embodiment of the invention in its unexpanded state;
Fig. 2 illustrates the preferred embodiment of the invention in its partially expended state; and
Fig. 3 illustrates the preferred embodiment of the invention in its fully expanded state.

### DETAILED DESCRIPTION OF THE PREFERRED EMBODIMENT

Embodiments of the present invention provide a highly nutritious, completely digestible dog chew. The dog owner can quickly and easily modify the texture or hardness of the chew to suit his particular dog by simply microwaving the chew for a short period of time.

The ingredients initially combined to form the chew of the present invention include from 60% to 95% casein and 5% to 40% gelatin. Casein which is a protein derived from milk is highly nutritious and easily digested by dogs. The gelatin content effects the hardness of the product, the higher the content, the softer the product. A 95% casein to 5% gelatin ratio results in a very hard dog chew. Additionally, any high protein meal of animal origin which is easily digestible by dogs may be added as a filler to the casein/gelatin combination. Attractants, such as beef or ham flavoring, as well as colorings, can be added in very small quantities to enhance the appeal of the product to both the dog as well as the buyer.

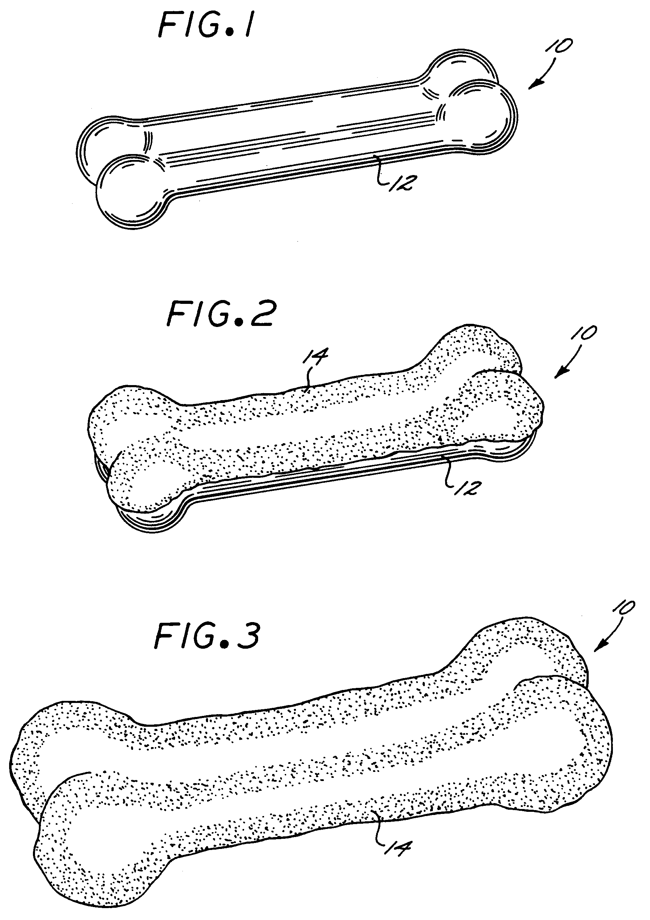

In order to cause the above described ingredients to be intimately combined with one another, the mixture is either heated to the components' melting temperatures or, alternatively, dissolved in water. Adjustment of the mixture's moisture content is accomplished by either heating to drive off excess moisture, or steam injection, to increase moisture at which point the material is either extruded, or preferably, molded into preselected shapes. A standard injection molding machine is the preferred method of producing the chews of the present invention. A bone shape for the chew, such as illustrated in Fig. 1 is preferred so that the public more readily recognizes the intended use of the product.

Immediately subsequent to the forming operation, the product is packaged in moisture-proof packing to preserve the moisture content of the chew at between 10% and 30% and, preferably, about 15%. Higher or lower moisture content affects the shelf-life of the product. Too much moisture causes the chew to deteriorate without the addition of stabilities. Less than the 10% moisture level renders the product hygroscopic.

Upon removal from the package, the person feeding the dog can modify the texture or hardness of the chew by subjecting it to microwave radiation. The expansion of the moisture within the chew causes the chew to expand. Subjecting the chew to microwave radiation facilitates the heating of areas deep within the chew at the same time the exterior heats up and expands. Fig. 1 illustrates the chew 10 prior to heating, in which state it has a substantially smooth exterior surface 12 and is of an extremely hard texture preferred by some dogs. A short exposure to microwave radiation initiates the expansion process. Fig. 2 illustrate the chew 10 in a partially expanded state. evidenced by a partially bubbled surface 14. In this state, the chew 10 is of an intermediate hardness preferred by some dogs. Fig. 3 illustrates the chew 10 in a fully expanded state as may result from a 10-20 second exposure in a standard household microwave oven. The entire chew 10 has a bubbled surface 14 and is easily chewable by most dogs. The chew in this state is ideal for small dogs with puppy teeth or old dogs who suffer from gum disease or who may have lost teeth. Sufficient exposure to microwave radiation will cause the chew to expand two to four times its original volume with a commensurate reduction in hardness.

### EXAMPLE 1

Rennet casein, 43.13kg (95lbs) and gelatin 2.27kg (5lbs), both ingredients screened to 30 mesh and of edible quality, are intermixed in an injection molding machine hopper blender. A feeding screw transports the intermixed material to an injection molding machine. The stresses imposed by the mechanical action on the material substantially raises its temperature while steam injection can be employed to ensure that a sufficiently high temperature is attained wherein the mixture melts and is moldable. Depending on the injection molding machine utilized and the characteristics of the specific casein and gelatin, molding temperatures can vary from 54.4°C (130°F) to 198.8°C (390°F). The rate of steam injection is controlled such that the overall moisture content of the molded product is about 15%. The chew is quickly packaged in a moisture proof packing to ensure that no moisture is lost.

### EXAMPLE 2

The above procedure is modified in that the 43.13kg (95lbs) of casein are first dissolved in about 65.83kg (145lbs) of hot water and added to 2.27kg (5lbs) of gelatin dissolved in about 3.632kg (8lbs) of cold water. Sufficient heat is supplied such that mixture's moisture content is reduced to about 15% by the time it is released from the mold. The molding and packaging process is the same as in the above-described example.

In use, the chew is given to the dog in its initial and hardest state. If the dog is unwilling or unable to chew on it, the chew is microwaved for short time increments and reoffered to the dog until the chew reaches a state of expansion and a degree of hardness preferred by the dog. Large, strong and healthy dogs would probably prefer the chew in its unmodified and hardest state while very small, young or very old dogs would refer the chew in its most expanded state.

While a particular form of the invention has been illustrated and described, it will also be apparent to those skilled in the art that various modifications can be made without departing from the scope of the invention. Accordingly, it is not intended that the invention be limited except as by the appended claims.

## Claims

1. A packaged dog chew (10) of modifiable hardness comprising a homogeneous mixture of 60-95% casein and 5-40% gelatin in which the dog chew (10) is adapted for subsequent exposure to microwave radiation so as to cause the chew (10) to expand and decrease in hardness by additionally having a total moisture content of 10-30% and being packaged in moisture-proof packaging.

2. The dog chew (10) of claim 1 wherein said mixture comprises 95% casein and 5% gelatin with a total moisture content of 15%.

3. The dog chew (10) of claim 1 or claim 2, wherein an injection molding process is employed to produce a shaped form of said mixture.

4. A method of preparing a dog chew (10) of a selected hardness for administration to a dog comprising the steps of: intermixing a combination of 60-95% casein and 5-40% gelatin; adjusting the moisture content of said intermixed combination to total 10-30%; molding said adjusted combination into a preselected shape; storing the molded dog chew (10) in moisture-proof packaging so as to maintain a preselected moisture content; removing the dog chew (10) from the moisture-proof packaging and subjecting the dog chew (10) to microwave radiation until it attains said selected hardness.

5. The method of claim 4 further comprising the step of heating said intermixed combination to its molding temperature.

6. The method of claim 5 wherein the steps of adjusting the moisture content and heating the intermixed combination are achieved by injecting steam.

7. The method of claim 4 wherein the step of intermixing the casein and gelatin is achieved by intermixing aqueous solutions of each.

8. The method of claim 7 wherein the step of adjusting the moisture content is achieved by evaporation.

## Patentansprüche

1. Verpackter Hundekaugegenstand (10) mit modifizierbarer Härte, umfassend ein homogenes Gemisch von 60 bis 95 % Casein und 5 bis 40 % Gelatine, wobei der Hundekaugegenstand (10) für eine nachfolgende Behandlung mit Mikrowellenstrahlung angepaßt ist, um zu bewirken, daß sich der Kaugegenstand (10) ausdehnt und in seiner Härte abnimmt, indem er zusätzlich einen Gesamtfeuchtigkeitsgehalt von 10 bis 30 % hat und in einer feuchtigkeitsundurchlässigen Verpackung verpackt ist.

2. Hundekaugegenstand (10) nach Anspruch 1, worin das Gemisch 95 % Casein und 5 % Gelatine mit einem Gesamtfeuchtigkeitsgehalt von 15 % umfaßt.

3. Hundekaugegenstand (10) nach Anspruch 1 oder Anspruch 2, worin ein Injektionsformungsprozeß verwendet wird, um eine geformte Gestalt des Gemisches herzustellen.

4. Verfahren zur Herstellung eines Hundekaugegenstands (10) mit ausgewählter Härte zur Verabreichung an einen Hund, umfassend die Schritte: Mischen einer Zusammensetzung von 60 bis 95 % Casein und 5 bis 40 % Gelatine, Einstellen des Feuchtigkeitsgehalts dieser gemischten Zusammensetzung auf gesamt 10 bis 30 %, Formen der eingestellten Zusammensetzung in eine ausgewählte Form, Lagern des geformten Hundekaugegenstands (10) in einer feuchtigkeitsundurchlässigen Verpackung, um einen ausgewählten Feuchtigkeitsgehalt beizubehalten, Entnehmen des Hundekaugegenstands (10) aus der feuchtigkeitsundurchlässigen Verpackung und Behandeln des Hundekaugegenstands (10) mit einer Mikrowellenstrahlung, bis er die gewählte Härte erreicht.

5. Verfahren nach Anspruch 4, das weiter umfaßt den Schritt die gemischte Zusammensetzung auf ihre Formungstemperatur zu erhitzen.

6. Verfahren nach Anspruch 5, worin die Schritte des Einstellens des Feuchtigkeitsgehalts und des Erhitzens der gemischten Zusammensetzung erreicht werden durch Injektion von Dampf.

7. Verfahren nach Anspruch 4, worin der Schritt des Mischens des Caseins und der Gelatine durch Mischen von jeweils wäßrigen Lösungen davon erreicht wird.

8. Verfahren nach Anspruch 7, worin der Schritt des Einstellens des Feuchtigkeitsgehalts durch Verdampfen erreicht wird.

## Revendications

1. Objet à mâchonner emballé pour chien (10) d'une dureté pouvant être modifiée comprenant un mélange homogène de 60 à 95 % de caséine et de 5 à 40 % de gélatine, dans lequel l'objet à mâchonner pour chien (10) est conçu pour une exposition ultérieure à un rayonnement par micro-ondes de façon à forcer l'objet à mâchonner (10) à se dilater et à diminuer de dureté en ayant, de plus, une teneur totale en humidité de 10 à 30 % et en l'emballant dans un emballage à l'épreuve de l'humidité.

2. Objet à mâchonner pour chien (10) selon la revendication 1, dans lequel ledit mélange comprend 95 % de caséine et 5 % de gélatine avec une teneur en humidité totale de 15 %.

3. Objet à mâchonner pour chien (10) selon la revendication 1 ou la revendication 2, dans lequel un processus de moulage par injection est utilisé pour produire un objet mis en forme dudit mélange.

4. Procédé de préparation d'un objet à mâchonner pour chien (10) d'une dureté sélectionnée destiné à un chien, comprenant les étapes suivantes : le mélange d'une combinaison de 60 à 95 % de caséine et de 5 à 40 % de gélatine ; l'ajustement de la teneur en humidité de ladite combinaison mélangée à un total de 10 à 30 % ; le moulage de ladite combinaison ajustée en une forme présélectionnée ; le stockage de l'objet moulé à mâchonner pour chien (10) dans un emballage à l'épreuve de l'humidité de façon à maintenir une teneur en humidité présélectionnée ; l'enlèvement de l'objet à mâchonner pour chien (10) depuis l'emballage à l'épreuve de l'humidité et la soumission de l'objet à mâchonner pour chien (10) à un rayonnement par micro-ondes jusqu'à ce qu'il atteigne ladite dureté sélectionnée.

5. Procédé selon la revendication 4, comprenant de plus l'étape de chauffage de ladite combinaison mélangée à sa température de fusion.

6. Procédé selon la revendication 5, dans lequel les étapes d'ajustement de la teneur en humidité et de chauffage de la combinaison mélangée sont atteintes en injectant de la vapeur.

7. Procédé selon la revendication 4, dans lequel l'étape de mélange de la caséine et de la gélatine est atteinte en mélangeant des solutions aqueuses de chacune d'entre elles.

8. Procédé selon la revendication 7, dans lequel l'étape d'ajustement de la teneur en humidité est atteinte par évaporation.
